# EUROPÄISCHE PATENTSCHRIFT

(11) **EP 1 132 419 B1**
(45) Veröffentlichungstag und Bekanntmachung des Hinweises auf die Patenterteilung: **25.08.2004**
(21) Anmeldenummer: 01102757.0
(22) Anmeldetag: 08.02.2001
(51) Int. Cl.: C09J 133/06, C09J 133/04, C08J 7/18, C08F 8/00, C08F 20/10

(54) **Polare Acrylathaftklebemassen**
Polar Acrylate Adhesives
Adhésifs à base d' acrylates polaires

(30) Priorität: 25.02.2000 DE 10008843
(43) Veröffentlichungstag der Anmeldung: 12.09.2001
(73) Patentinhaber: tesa AG, 20253 Hamburg (DE)
(72) Erfinder: Husemann, Marc, Dr., 22605 Hamburg (DE); Zöllner, Stephan, Dr., 22043 Hamburg (DE)

(56) Entgegenhaltungen:
- EP-A- 0 594 109
- EP-A- 0 660 187
- WO-A-92/15394
- US-A- 4 900 624

## Beschreibung

Die Erfindung betrifft ein Polyacrylat, welches durch Vernetzung mittels UV-Licht und Temperatureinwirkung über die Umwandlung von unpolaren in polare funktionelle Gruppen hergestellt werden kann, ein Verfahren zur Herstellung dieses Polyacrylats sowie die Verwendung dieser Polymermischung als Haftklebemasse.

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von anwachsender Bedeutung, da die Umweltauflagen immer größer werden und die Preise für Lösungsmittel weiter steigen. Daher sollten Lösungsmittel so weit wie möglich aus dem Fertigungsprozeß für Haftklebebänder eliminiert werden. Durch die damit verbundene Einführung der Hotmelt-Technologie werden immer höhere Anforderungen an die Klebemassen gestellt. Insbesondere Acrylathaftklebemassen werden sehr intensiv auf Verbesserungen hin untersucht. Für hochwertige industrielle Anwendungen werden Polyacrylate bevorzugt, da diese transparent und witterungsstabil sind. Neben diesen Vorteilen müssen diese Acrylathaftklebemassen aber auch hohen Anforderungen im Bereich der Scherfestigkeit und der Klebkraft gerecht werden. Dieses Anforderungsprofil wird durch Polyacrylate mit hohem Molekulargewicht, hoher Polarität und anschließender effizienter Vernetzung erreicht. Diese sehr scherfesten und polaren Haftklebemassen besitzen aber den Nachteil, daß sie für den Hotmelt-Extrusionsprozeß nicht gut geeignet sind, da hohe Anwendungstemperaturen erforderlich sind und da außerdem durch Scherung im Extruder das Molekulargewicht des Polymers abgebaut wird. Durch diese Schädigung wird das klebtechnische Niveau deutlich herabgesetzt. Die Klebkraft und die Anfaßklebrigkeit (Tack) sind in der Regel gering, da die Glasübergangstemperatur durch die polaren Anteile in den Klebemassen relativ hoch liegt. Besonders die Scherfestigkeiten der Hotmelt-beschichteten Acrylathaftklebemassen fallen - im Vergleich zur ursprünglichen mit Lösungsmittel beschichteten Haftklebemasse - deutlich ab. Daher werden zur Zeit unter schiedliche Konzepte zur Verringerung der Fließviskosität und damit der leichteren Extrusionsbeschichtung dieser Haftklebemassen untersucht.
In der Technik werden verschiedene Konzepte verfolgt, um dieses Ziel zu erreichen. Eine Möglichkeit dazu ist die sehr effiziente Vernetzung einer niedrigviskosen und unpolaren Acrylatklebemasse erst auf dem Träger. Acrylate mit elektronendrückenden Gruppen werden copolymerisiert und stabilisieren während der UV- oder ESH-Vernetzung (ESH: Elektronenstrahlhärtung) entstehende Radikale. Beispiele hierfür sind tertiäre Amine enthaltende Monomere [W0 96/35725], tertiäres Butylacrylamid als Monomer [US 5,194,455] und die in der EP 0 343 467 B1 zitierten eingesetzten Tetrahydrofurylacrylate. Ein weiteres Konzept der effizienten Vernetzung ist die Copolymerisation von UV-Photoinitiatoren in die Polyacrylatkette. So wurde z.B. Benzoinacrylat als Comonomer eingesetzt und die Vernetzung auf dem Träger mit UV-Licht durchgeführt [DE 27 43 979 A1]. In der US 5,073,611 wurden dagegen Benzophenon und Acetophen als copolymerisierbare Monomere verwendet.

Eine vollkommen neue Methode kommt aus der Chipherstellung. Durch Zusatz eines Photokationeninitiators und UV-Lichtbestrahlung werden Polymere mit Ester-Funktionen entschützt und freie Carbonsäuren oder Hydroxyfunktionen generiert. Diese Methode wurde in der US 4,491,628 beschrieben. Neuere Entwicklungen beschäftigen sich mit der Veränderung der UV-Licht-Wellenlänge auf 193 nm [US 5,910,392] und mit der Verbesserung der Auflösung [US 5,861,231; US 4,968,581; US 4,883,740; US 4,810,613; US 4,491,628].

Aufgabe der Erfindung ist es, ein Polyacrylat zur Verfügung zu stellen, welches aus einem Ausgangspolymer mit geringer Verarbeitungsviskosität hergestellt werden kann, und welches erst nach der Verarbeitung, z. B. in einem Hotmelt-Prozeß, in eine hochscherfeste Masse überführt wird. Durch geeignete Wahl der Reaktionsparameter während der Umwandlungsreaktion sollen sich dabei die physikalischen Eigenschaften des Polymers einstellen lassen. Die die Umwandlung verursachende Reaktion soll durchgeführt werden können, wenn die Polymermasse bereits in ihrer endgültigen Form, z.B. aufgetragen als Klebmasse auf einem Träger, vorliegt.

Gelöst wird diese Aufgabe durch ein Polyacrylat gemäß dem Hauptanspruch. Die Unteransprüche betreffen vorteilhafte Weiterbildungen der Erfindung sowie ein Verfahren zur Herstellung des Polyacrylates sowie dessen Verwendung.

Demgemäß sind Gegenstand der Erfindung vemetzte Polyacrylate, die durch mittels UV-Strahlung hervorgerufener Vernetzung einer Polymermischung aus den Komponenten
a) Polyacrylatcopolymere aus den folgenden Monomeren
   a1) Acrylsäure und/oder Acrylsäureester der folgenden Formel

      CH₂ = CH(R¹)(COOR²),

      wobei R¹ = H oder CH₃ und R² eine Alkylkette mit 1 - 20 C-Atomen ist,
      zu 70 - 99 Gew.-%, bezogen auf Komponente (a),
   a2) olefinisch ungesättigte Monomere mit funktionellen Gruppen,
      zu 0 - 15 Gew.-%, bezogen auf Komponente (a),
   a3) tert.-Butylacrylat, und
      zu 1 - 15 Gew.-%, bezogen auf Komponente (a), und
b) einem Photokationenerzeuger.
   zu 0,01 - 25 Gew.-%, bezogen auf die Gesamt-Polymermischung
hergestellt werden

In besonders vorteilhafter Ausführung liegen Komponente (a1) zu 85 - 89 Gew.-%, bezogen auf Komponente (a), und/oder Komponente (a2) zu 4 - 6 Gew.-%, bezogen auf Komponente (a), und/oder Komponente (a3) zu 7 - 9 Gew.-%, bezogen auf Komponente (a), vor.

Sehr vorteilhaft ist es, eine Polymermischung einzusetzen, der bis zu 3 Gew.-%, bezogen auf die Gesamt-Polymermischung, eines
c) bi- oder multifunktionellen Vemetzers
zugesetzt wird.

Als Vemetzer lassen sich hier alle bi- oder multifunktionellen Verbindungen einsetzen, deren funktionelle Gruppen mit den Polyacrylaten eine Verknüpfungsreaktion eingehen können, insbesondere Polymerisations-, Polykondensations- oder Polyaddifionsreaktionen. Bevorzugt werden diese Reaktionen an einer Carboxylgruppe angreifen. Als Vemetzer sind insbesondere Epoxide oder Isocyanate mit mindestens zwei funktionellen Gruppen, aber auch alle anderen mit Carboxylgruppen reagierenden Verbindungen, geeignet. Eingesetzt werden können hierfür auch Metall-Chelat-Verbindungen.

Weiterhin beinhaltet die Erfindung ein Verfahren zur Herstellung eines Polyacrylats, dadurch gekennzeichnet, daß die Polymermischung auf ein Trägermaterial aufgestrichen und auf diesem Trägermaterial durch Bestrahlung mit UV-Licht vemetzt wird.

Die Erfindung umfaßt außerdem die Verwendung des Polyacrylates nach einem der oberen Ansprüche als Haftklebemasse, insbesondere die Verwendung als Haftklebemasse für ein Klebeband, wobei die Acrylathaftklebemasse als ein- oder doppelseitiger Film auf einer Trägerfolie vorliegt.
Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Gewebe und Gewebefolien sowie gegebenenfalls Trennpapier verwenden. Diese Aufzählung soll nicht abschließend sein.

Die dargestellte Erfindung ermöglicht es, die gestellten Aufgaben zu lösen. Es wird ein Polymergemisch vorgestellt, welches während der Verarbeitung niedrigviskos vorliegt und in welchem durch Umwandlung von nichtpolaren in polare Gruppen die Scherfestigkeit erhöht werden kann, nachdem es beispielsweise auf einen Träger aufgebracht wurde. Die Fließviskosität der Ausgangspolyacrylate ist sehr niedrig und eignet sich daher sehr gut zum Beispiel für den Hotmelt-Prozeß.

Die Grundlagen der Erfindung werden im folgenden dargestellt. Die Ausgangspolymere lassen sich durch eine freie radikalische Polymerisation herstellen, ihr Molekulargewicht liegt in der Größenordnung von 1.000.000. Für die Ausgangspolymermischung kann jedes Polymer eingesetzt werden, welches Klebeigenschaften nach dem Handbook of Pressure-sensitive Adhesives, S. 172, §1, 1989 aufweist. Als wesentliche Komponente für die später ablaufende Entschützungsreaktion müssen Polymere zugegen sein, die mit tert.-Butylacrylat als Comonomer hergestellt wurden, da die Überführung der unpolaren in polare Gruppen auf der Ersetzung der tert.Butylgruppe durch Protonen basiert.

Die chemische Reaktion, die die Umwandlung von unpolaren in polare Haftklebemassen auf dem Träger zur Folge hat, ist eine Entschützung des tert.-Butylacrylates zur freien Carbonsäure in Anwesenheit von Protonen und bereits seit langem bekannt [Loev, Chem. Ind. (London) 193 (1964)].

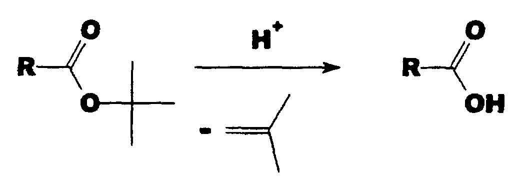

Diese Reaktion wird in der Photoresist-Technik (Photoresists: lichtempfindliche, filmbildende Materialien (Photolacke), deren Löslichkeitsverhalten sich durch Belichtung oder Bestrahlung ändert; bei negativ arbeitenden Photoresists geschieht dies durch Vemetzung oder Photopolymerisation) zur Entschützung von tert.-Butyl-Gruppen eingesetzt. Dort wird die Säure durch die UV-Bestrahlung eines beigemischten Photokationeninitiators hergestellt.
Im Rahmen dieser Erfindung wurde diese Technik auf Haftklebemassen übertragen.

Kationische Photoinitiatoren sind typischerweise Aryldiazoniumsalze ("Oniumsalze"), die sich allgemein durch die Formel Ar-N=N⁺ LX⁻ darstellen lassen, wobei LX⁻ ein Addukt einer Lewissäure L und einer Lewisbase X⁻ ist. Besonders vorteilhaft sind BF₄⁻, SbF₅⁻, AsF₅⁻, PF₅⁻, SO₃CF₂⁻ für LX⁻. Unter UV-Strahlungseinfluß kommt es zu einer schnellen Molekülspaltung in das Arylhalogenid (ArX), Stickstoff sowie die entsprechende Lewissäure.
Auch Diaryliodoniumsalze (C₆H₅)₂l⁺ LX⁻ und Triarylsulfoniumsalze (C₆H₅)₃S⁺ LX⁻ sind für die Anwendung als kationische Photoinitiatoren bekannt; diese bilden in Gegenwart von Protonendonatoren starke (Brönstedt-)Säuren, welche ebenfalls für die Initiierung von kationischen Polymerisationen gut geeignet sind.
Sulfoniumsalze als Kationen-Photoinitiatoren liegen beispielsweise auch in Form der Verbindungen H₅C₆-CO-CH₂-S⁺ LX⁻ oder H₅C₆-CO-CH₂-Pyr⁺ LX⁻, wobei Pyr ein stickstoffhaftiges heteroaromatisches System (z.B. Pyridin, Pyrimidin) darstellt, vor.

Für die dargestellte Vernetzungsreaktion werden die dem Fachmann geläufigen Photokationeninitiatoren, vorzugsweise einer derjenigen Initiatoren aus der im vorstehenden Abschnitt dargestellten Gruppe, verwendet.

### Beispiele

Die folgenden beispielhaften Experimente sollen den Inhalt der Erfindung näher eriäutem, ohne durch die Wahl der Beispiele die Erfindung unnötig einschränken zu wollen.

### Testmethoden

Zur Charakterisierung der Polyacrylatmassen und deren vemetzter Produkte dienten die im folgenden dargestellten Testmethoden:

### Scherfestigkeit (Test A1, A2, A3)

Ein 13 mm breiter Streifen des Klebebandes wurde auf eine glatte und gereinigte Stahloberfläche aufgebracht. Die Auftragsfläche betrug 20 mm × 13 mm (Länge × Breite). Anschließend wurde wie folgt vorgegangen:
Test A1: Bei Raumtemperatur wurde ein 1 kg-Gewicht an dem Klebeband befestigt und die Zeit bis zum Abfallen des Gewichtes gemessen.
Test A2: Bei 70°C wurde ein 0,5 kg-Gewicht an dem Klebeband befestigt und die Zeit bis zum Abfallen des Gewichtes gemessen.
Die gemessenen Scherstandzeiten sind jeweils in Minuten angegeben und entsprechen dem Mittelwert aus drei Messungen.

### Dynamisch-Mechanische Analyse, DMA (Test B)

Die Messungen wurden mit dem Gerät Dynamic Stress Rheometer von Rheometrics durchgeführt. Bei 25 °C wurde der mechanische Verlustfaktor tan δ in Abhängigkeit der Frequenz in einem Intervall von 0,1 bis 100 rad/s verfolgt. Es wurde mit paralleler Plattenanordnung gemessen.

### IR-Spektroskopie (Test C)

Die Messungen wurden an einem Bruker IFS 45 durchgeführt. Der Anteil der entstehenden Acrylsäure wurde mittels einer Kalibrierkurve quantifiziert.

### Rolling-Ball (Test D)

Ein 25 mm breiter Klebestreifen wird mit der zu prüfenden Klebemasseseite auf eine Meßschiene gelegt. Durch Lösen der Sperrvorrichtung rollt eine V2A-Meßkugel mit 11 mm Durchmesser die Rampe hinunter und auf einer waagerechten, mit der Klebemasse beschichteten Massefläche entlang.
Die durchlaufende Distanz auf der Klebstoffschicht in mm dient als Maß für den Tack.

### Untersuchte Proben

Die für die Experimente verwendeten Proben wurden wie folgt hergestellt:

Die Polymere wurden konventionell über eine freie radikalische Polymerisation hergestellt; das mittlere Molekulargewicht lag bei etwa 1.000.000. Als zweite Komponente wurde ein UV-Kationenerzeuger beigemischt. Verwendet wurden für photochemisch initiierte Polymerisationen dem Fachmann bekannte Photoinitiatoren.

### Beispiel 1

Ein für radikalische Polymerisationen konventioneller 2 L-Glasreaktor wurde mit 36 g tert.-Butylacrylat, 40 g Methylacrylat, 324 g 2-Ethylhexylacrylat und 266 g Aceton/Isopropanol (97:3) befüllt. Nachdem 45 Minuten Stickstoffgas unter Rühren durch die Reaktionslösung geleitet worden war, wurde der Reaktor auf 58 °C geheizt und 0,4 g AIBN [2,2'-Azobis(2-methylbutyronitril)] hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Isopropanol-Gemisch verdünnt. Nach 36 h Reaktionszeit wurde die Polymerisation abgebrochen und das Reaktionsgefäß auf Raumtemperatur abgekühlt. Anschließend wurde das Polymer auf PET-Folie bzw. Trennpapier mit 50 g/m² aufgetragen, mit Elektronenstrahlung gehärtet und anschließend klebetechnisch mit Test A, B und D geprüft.

### Beispiel 1c

Es wurde anlalog Beispiel 3 c vorgegangen. 400 g der Klebmasse 1 (50 %ige Lösung) wurden mit 17,8 g Triarylsulfoniumhexafluorophosphat (Cyracure UVI-6990 ® [UNION CARBIDE]; 50%ige Lösung) gemischt und homogenisiert.

### Beispiel 2

Es wurde analog Beispiel 1 vorgegangen. Zur Polymerisation wurden 20 g tert.-Butylacrylat, 80 g Methylacrylat und 300 g 2-Ethylhexylacrylat eingesetzt. Die Lösungsmittelmengen wurden beibehalten.

### Beispiel 2c

Es wurde analog Beispiel 3c vorgegangen. 400 g der Klebmasse 2 (50 %ige Lösung) wurden mit 9,90 g Triarylsulfonium-hexafluorophosphat (Cyracure UVI-6990 ® [UNION CARBIDE]) gemischt und homogenisiert.

### Beispiel 3

Es wurde analog Beispiel 1 vorgegangen. Zur Polymerisation wurden 40 g tert.-Butylacrylat und 360 g n-Butylacrylat eingesetzt Die Lösungsmittelmengen wurden beibehalten.

### Beispiel 3a

400 g der Klebemasse 3 (50 %ige Lösung) wurden mit 6,60 g (5 Molprozent) Triarylsuffoniumhexafluorophosphat (Cyracure UVI-6990 ® [UNION CARBIDE]; 50 %ige Lösung) gemischt. Nach der Homogenisierung wurde die Klebemassen auf Trennpapier ausgestrichen, mit 30 Sekunden mit UV-Licht bestrahlt und 10 Minuten bei 120 °C temperiert. Zur UV-Bestrahlung wurde der Xenon-Chlorid-Strahler (VIB 308 Bulb [FUSION]) eingesetzt. Der Anteil an Polyacrylsäure wurde mit Test C ermittelt.

### Beispiel 3b

Es wurde analog Beispiel 3a vorgegangen. Es wurden 400 g der Klebemasse 3 (50 %ige Lösung) mit 12,2 g (10 Molprozent) Triarylsulfoniumhexafluorophosphat (Cyracure UVI-6990 ® [UNION CARBIDE]; 50 %ige Lösung) gemischt.

### Beispiel 3c

Es wurde analog Beispiel 3a vorgegangen. Es wurden 400 g der Klebemasse 3 (50 %ige Lösung) mit 19,8 g (15 Molprozent) Triarylsulfoniumhexafluorophosphat (Cyracure UVI-6990 ® [UNION CARBIDE]; 50 %ige Lösung) gemischt.

### Beispiel 3d

Es wurde analog Beispiel 3a vorgegangen. Es wurden 400 g der Klebemasse 3 (50 %ige Lösung) mit 24,4 g (20 Molprozent) Triarylsulfoniumhexafluorophosphat (Cyracure UVI-6990 ® [UNION CARBIDE]; 50 %ige Lösung) gemischt.

### Beispiel 3e

Es wurde analog Beispiel 3c vorgegangen. Die UV-Belichtungszeit betrug 6 Sekunden.

### Beispiel 3f

Es wurde analog Beispiel 3c vorgegangen. Die UV-Belichtungszeit betrug 18 Sekunden.

### Beispiel 3g

Es wurde analog Beispiel 3c vorgegangen. Die UV-Belichtungszeit betrug 45 Sekunden.

### Beispiel 3h

Es wurde analog Beispiel 3c vorgegangen. Die UV-Belichtungszeit betrug 60 Sekunden.

### Beispiel 3i

Es wurde analog Beispiel 3c vorgegangen. Die UV-Belichtungszeit betrug 90 Sekunden.

### Beispiel 3j

Es wurde analog Beispiel 3c vorgegangen. Das Polyacrylat wurde für 30 Minuten getempert.

### Beispiel 3k

Es wurde analog Beispiel 3c vorgegangen. Das Polyacrylat wurde für 60 Minuten getempert.

### Resultate

Ein Träger wurde mit der Acrylathaftklebemasse beschichtet und diese mit UV-Strahlung in verschiedenen Dosen bestrahlt. Bei 120 °C oder 140 °C wurde die Entschützung durchgeführt. Durch die Wahl der Temperatur und der Energiedosis läßt sich der Umsatz steuern. Die klebtechnischen Ausprüfungen zeigten eine deutliche Verbesserung der Eigenschaften hinsichtlich der Scherfestigkeit. Die UV-behandelte Klebemasse zeigte einen deutlich höhere Fließviskosität und eine höhere Glastemperatur T_{G} als die unbehandelte Basismasse.

Die zur Charakterisierung durchgeführten Polymerisationen sind in Tab. 1 zusammengefaßt.

**Tabelle 1**

| Beispiel | t-BuA [%] | 2-EHA [%] | MA [%] | n-BuA [%] |
|---|---|---|---|---|
| 1 | 9 | 81 | 10 | 0 |
| 2 | 5 | 75 | 20 | 0 |
| 3 | 10 | 0 | 0 | 90 |
| t-BuA = tert.-Butylacrylat | | | | |
| 2-EHA = 2-Ethylhexylacrylat | | | | |
| MA = Methylacrylat | | | | |
| n-BuA = n-Butylacrylat | | | | |

Das erreichte Molekulargewicht lag bei den Beispielen 1 - 3 bei etwa 1.000.000. Da diese Polyacrylatklebemassen als Referenz dienen sollen, wurden die Beispiele 1 - 3 klebtechnisch geprüft, insbesondere im Hinblick auf die Scherfestigkeit (s. Tabelle 3). Da Polyacrylatmassen ohne Vernetzung nicht sehr kohäsiv sind, wurde zuvor durch Bestrahlung mit Elektronenstrahlen verschiedener Intensitäten vernetzt. Des weiteren wurden diese Massen durch DMA untersucht, um die Fließviskositäten miteinander vergleichen zu können.

Um diese unpolaren in polarere Massen zu überführen, wurden die Beispiele 1 - 3 mit UV-Kationenerzeugem vermischt. Zur Überprüfung der Anwendbarkeit dieser Methode wurde Beispiel 3 mit verschiedenen Gewichtsmengen Cyracure UVI 6990 vermengt, auf einen PET-Folienträger ausgestrichen und verschiedenen Dosen an UV-Strahlung ausgesetzt.

Als UV-Quelle diente ein Xenon-Chlorid-Strahler (VIB 308 Bulb [FUSION]) .

**Tabelle 2**

| Beispiel 3 | UV-Photoinitiator [Mol-%] | Belichtungsdauer [sec] | Trocknungsdauer [min] bei 120°C | Umsatz [%] durch IR |
|---|---|---|---|---|
| 3a | 5 | 30 | 10 | 76 |
| 3b | 10 | 30 | 10 | 93 |
| 3c | 15 | 30 | 10 | 98 |
| 3d | 20 | 30 | 10 | 98 |
| 3e | 15 | 6 | 10 | 32 |
| 3f | 15 | 18 | 10 | 46 |
| 3g | 15 | 45 | 10 | 98 |
| 3h | 15 | 60 | 10 | 98 |
| 3i | 15 | 90 | 10 | 98 |
| 3j | 15 | 30 | 30 | 98 |
| 3k | 15 | 30 | 60 | 98 |

Variiert wurden die Menge an Photoinitiator, die Belichtungs- und die Trocknungszeit. Der Umsatz wurde mittels IR-Spektroskopie (Test C) bestimmt. Durch diese Untersuchung wurden die optimalen Reaktionsbedingungen für die tert.-Butylacrylat-Entschützung in Acrylathaftklebemassen ermittelt. Mit 15 Mol-% Photoinitiator Triarylsulfoniumhexafluorophosphat (Cyracure UVI-6990 ® [UNION CARBIDE]) bei einer Belichtungszeit von 30 Sekunden und 10minütigem Temperieren bei 120 °C erreichte man einen Umsatz von 98 %, bezogen auf die Menge tertiären Butylacrylats im Basispolymerisat. Die Umsätze wurden durch IR-Spektroskopie bestimmt. Durch NMR-spektroskopische Messungen konnten diese Resultate bestätigt werden.

Nach der Ermittlung der Reaktionsparameter wurden die Klebemassen 1 - 3 mit 15 Mol-% Photoinitiator Triarylsulfoniumhexafluorophosphat (Cyracure UVI-6990 ® [UNION CARBIDE]) vermischt, auf einen Trennpapier-Träger aufgestrichen, 30 Sekunden belichtet und 10 Minuten bei 120 °C temperiert. Anschließend wurden die Massen mit Elektronenstrahlen einer Dosis von 100 kGy vemetzt, um die Kohäsion der Klebemassen zu erhöhen. Zur Referenz wurden die Basismassen 1 - 3 ebenfalls auf demselben Trennpapier aufgetragen und mit Elektronenstrahlen einer Dosis von 100 kGy vernetzt. Um den Effekt der UV-Behandlung zu untersuchen, wurden die Haftklebemassen klebtechnisch geprüft. Die Ergebnisse sind in Tabelle 3 dargestellt:

**Tabelle 3**

| Beispiel | SSZ 10 N, RT [min] (Test A1) | SSZ 5 N, 70°C [min] (Test A2) |
|---|---|---|
| 1 | 90 | 15 |
| 2 | 64 | 23 |
| 3 | 88 | 26 |
| 1c | 10000 | 745 |
| 2c | 8732 | 537 |
| 3c | 10000 | 1102 |
| SSZ: Scherstandzeiten | | |

Die Umwandlung der unpolaren Massen 1 - 3 in die UV-behandelten und somit deutlich polareren Acrylatmassen 1c - 3c zeigte einen deutlichen Effekt auf die klebetechnischen Eigenschaften. Durch die Erhöhung des Polyacrylsäureanteils von 0 auf 5 - 10 % stieg die Kohäsion der Acrylathaftklebemassen deutlich an. Die Scherfestigkeit der UV-behandelten Klebebänder stieg bei einem Belastungsgewicht von 1 kg von unter 100 Minuten auf 8.732 (2c) oder 10.000 Minuten (1c, 3c). Dies läßt sich durch die Ausbildung von Wasserstoff-Brückenbindungen der Carbonsäuregruppen erklären. Weiterhin steigt durch die Umwandlung in die polarere Acrylathaftklebemasse die Glasübergangstemperatur T_{G} an. Dieser Effekt beeinflußte ebenfalls beide Scherteste. Nach der UV-Behandlung stiegen auch die Wärmescherstandzeiten deutlich an. Die erzielten Werte liegen auf dem Niveau einer sehr scherfesten und kohäsiven Haftklebemasse. Ein weiterer positiver Effekt dieses Prozesses ist die leichte in-situ-Vemetzung. Nach der UV-Behandlung wird für die entschützte Klebemasse ein Gelwert (Gewichtsanteil des Polymers, der nicht in Toluol löslich ist) von 12 % gemessen. Die generierten Carbonsäuregruppen reagieren somit unter UV-Licht und bei Temperierung auf dem Träger miteinander und führen somit zu einer Vorvernetzung. Für die anschließende ESH-Vernetzung wird im Regelfall eine geringere Elektronenstrahl-Dosis benötigt, was wiederum Trägerschädigungen vermeidet.

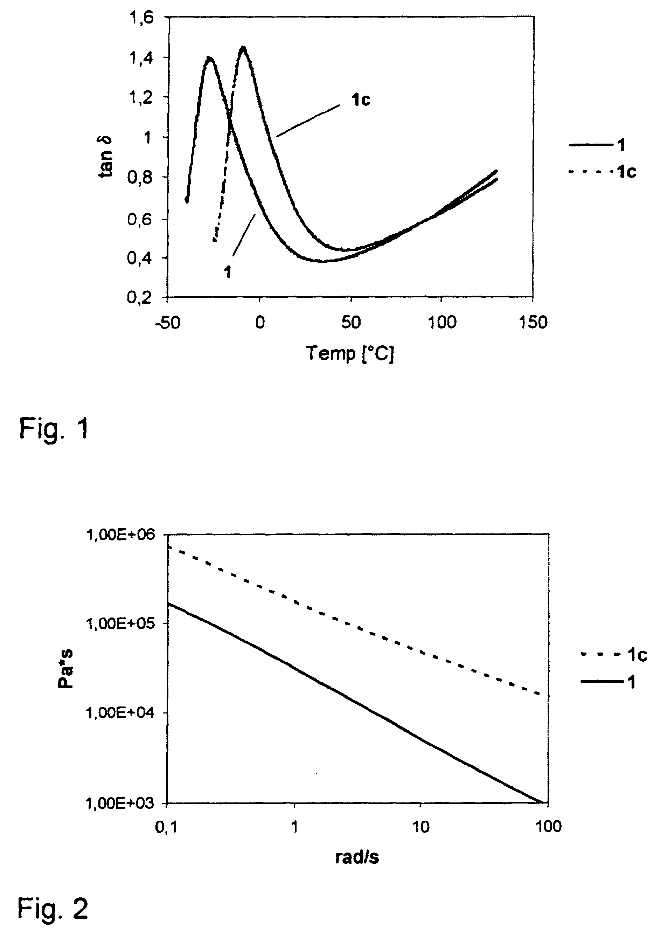

Um die Hotmeltfähigkeit dieses Prozesses zu unterstreichen, wurden DMA-Messungen vom Ausgangspolymerisat und vom Endprodukt, jedoch noch vor der Elektronenstrahlhärtung, durchgeführt.
Die Dynamisch-Mechanische Analyse bietet die Möglichkeit, Veränderungen in der Glasübergangstemperatur und in der Fließviskosität zu bestimmen. Es wurden die Massen 1 und 1c durch DMA untersucht und miteinander verglichen (Test B). Die Ergebnisse der Messung zeigt Figur 1.

Die Klebemassen 1 und 1c sind unvernetzt und unterscheiden sich in Ihrem dynamischen T_{G} (Glasübergangstemperatur-Wert). Die Glasübergangstemperatur von 1 liegt bei -28°C, während nach der UV Behandlung und Temperierung (1c) der T_{G} auf -5°C ansteigt. Dies ist wiederum ein Beleg für den Einfluß der durch UV-Strahlen entstehenden Polyacrylsäure.

Unter Berücksichtigung eines Molekulargewichtes von 1.000.000 und des Einsatzes relativ unpolarer Comonomerer zeigt sich eine sehr gute Extrudierbarkeit für das Ausgangspolymerisat. Durch die geringere Glasübergangstemperatur läßt sich diese Masse im Aufkonzentrationsextruder bei relativ niedrigen Temperaturen und hohem Durchsatz verarbeiten. Durch die niedrigeren Temperaturen wird das Polyacrylat kaum geschädigt, und das mittlere Molekulargewicht bleibt erhalten. Zudem wird eine bei hohen Temperaturen eintretende Vergelung vermieden. Dagegen ist die auf dem Träger generierte polare Klebemasse mit einer Glasübergangstemperatur von -5 °C bedeutend schwerer aufzukonzentrieren. Die in der Klebemasse entstandenen Carbonsäuregruppen bilden Wasserstoff-Brückenbindungen aus, die die Fließviskosität dieses Systems ansteigen lassen. Diese Annahme wurde durch DMA-Messungen bestätigt. Im Figur 2 gezeigten Frequenzsweep wurde bei konstanter Temperatur die Fließviskosität der Klebemassen ermittelt.

Nach der UV-Bestrahlung steigt die Fließviskosität von 1 deutlich an (s. Fig. 2). Dies korrespondiert wiederum mit den zuvor gemessenen Glasübergangstemperatur-Werten. Die Zunahme der inneren Festigkeit durch Ausbildung von Wasserstoff-Brückenbindungen bewirkt ein deutliches Ansteigen der Fließviskosität. Die auf dem Träger generierte Klebemasse würde sich im Extruder nur bei sehr hohen Temperaturen aufkonzentrieren lassen.

Insgesamt eignet sich dieser UV-Prozess besonders gut für die Hotmelt-Technologie zur Herstellung hochviskoser und hochscherfester Acrylathaftklebemassen aus niedrig-viskosen und gut im Aufkonzentrationsextruder verarbeitbaren Basisacrylatmassen.

## Patentansprüche

1. Vemetzte Polyacrylate, erhalten durch mittels UV-Strahlung hervorgerufene Vemetzung einer Polymermischung aus
a) Polyacrylatcopolymeren aus den folgenden Monomeren
a1) Acrylsäure und/oder Acrylsäureester der folgenden Formel
CH₂ = CH(R¹)(COOR²),
wobei R¹ = H oder CH₃ und R² eine Alkylkette mit 1 - 20 C-Atomen ist,
zu 70 - 99 Gew.-%, bezogen auf Komponente (a),
a2) olefinisch ungesättigte Monomere mit funktionellen Gruppen,
zu 0 - 15 Gew.-%, bezogen auf Komponente (a),
a3) tert.-Butylacrylat, und
zu 1 - 15 Gew.-%, bezogen auf Komponente (a), und
b) einem Photokationenerzeuger.
zu 0,01 - 25 Gew.-%, bezogen auf die Gesamt-Polymermischung.

2. Vemetzte Polyacrylate nach Anspruch 1, **dadurch gekennzeichnet, daß**
Komponente (a1) zu 85 - 89 Gew.-%, bezogen auf Komponente (a), und/oder
Komponente (a2) zu 4 - 6 Gew.-%, bezogen auf Komponente (a), und/oder
Komponente (a3) zu 7 - 9 Gew.-%, bezogen auf Komponente (a),
vorliegen.

3. Polyacrylate nach einem der oberen Ansprüche, **dadurch gekennzeichnet, daß** der Polymermischung
c) bis zu 3 Gew.-%, bezogen auf die Gesamt-Polymermischung, eines bi- oder multifunktionellen Vemetzers zugesetzt wird.

4. Verfahren zur Herstellung eines Polyacrylats, **dadurch gekennzeichnet, daß**
die Polymermischung aus Anspruch 1 auf ein Trägermaterial aufgestrichen und auf diesem Trägermaterial durch Bestrahlung mit UV-Licht vernetzt wird.

5. Verwendung des Polyacrylates nach einem der oberen Ansprüche als Haftklebemasse.

6. Verwendung des Polyacrylates nach einem der oberen Ansprüche als Haftklebemasse für ein Klebeband, wobei die Acrytathaftklebemasse als ein- oder doppelseitiger Film auf einer Trägerfolie vorliegt.

## Claims

1. Crosslinked polyacrylates obtained by crosslinking, induced by means of UV radiation, of a polymer mixture comprising
a) polyacrylate copolymers of the following monomers
a1 ) acrylic acid and/or acrylic esters of the following formula
CH₂ = CH(R¹)(COOR²),
where R¹ = H or CH₃ and R² is an alkyl chain having 1-20 carbon atoms,
at 70-99% by weight, based on component (a),
a2) olefinically unsaturated monomers containing functional groups,
at 0-15% by weight, based on component (a),
a3) tert-butyl acrylate,
at 1-15% by weight, based on component (a), and
b) a photocationic initiator
at 0.01-25% by weight, based on the overall polymer mixture.

2. Crosslinked polyacrylates according to Claim 1, **characterized in that**
component (a1) is present at 85-89% by weight, based on component (a), and/or
component (a2) is present at 4-6% by weight, based on component (a), and/or
component (a3) is present at 7-9% by weight, based on component (a).

3. Polyacrylates according to any of the above claims, **characterized in that**
c) up to 3% by weight, based on the overall polymer mixture, of a difunctional or polyfunctional crosslinker is added to the polymer mixture.

4. Process for preparing a polyacrylate, **characterized in that** it comprises applying the polymer mixture of Claim 1 to a backing material and crosslinking it on said backing material by irradiation with UV light.

5. Use of the polyacrylate according to any of the above claims as a pressure-sensitive adhesive composition.

6. Use of the polyacrylate according to any of the above claims as a pressure-sensitive adhesive composition for an adhesive tape, where the acrylic pressure-sensitive adhesive composition is present as a single- or double-sided film on a backing sheet.

## Revendications

1. Polyacrylates réticulés, qui peuvent être obtenus par une réticulation provoquée par une irradiation aux UV d'un mélange de polymères constitué de :
a) copolymères de polyacrylate, obtenus à partir des monomères suivants :
a1) acide acrylique et/ou esters de l'acide acrylique de la formule suivante :
CH₂ = CH(R¹)(COOR²),
où R¹ = H ou CH₃ et R² représente une chaîne alkyle comprenant 1 à 20 atomes de carbone, à raison de 70 à 99% en poids par rapport au composant (a),
a2) monomères oléfiniquement insaturés présentant des groupes fonctionnels, à raison de 0 à 15% en poids par rapport au composant (a),
a3) acrylate de tert-butyle, à raison de 1 à 15% en poids par rapport au composant (a) et
b) un agent de formation de photocations, à raison de 0,01 à 25% en poids par rapport au mélange total de polymères.

2. Polyacrylates réticulés selon la revendication 1, **caractérisés en ce que**
le composant (a1) est présent à raison de 85 à 89% en poids, par rapport au composant (a), et/ou
le composant (a2) à raison de 4 à 6% en poids, par rapport au composant (a) et/ou
le composant (a3) à raison de 7 à 9% en poids, par rapport au composant (a).

3. Polyacrylates selon l'une quelconque des revendications précédentes, **caractérisés en ce qu'**on ajoute au mélange de polymères
c) jusqu'à 3% en poids, par rapport au mélange total de polymères, d'un réticulant difonctionnel ou polyfonctionnel.

4. Procédé pour préparer un polyacrylate, **caractérisé en ce que** le mélange de polymères selon la revendication 1 est étalé sur un matériau support et est réticulé sur ce matériau support par irradiation avec de la lumière UV.

5. Utilisation du polyacrylate selon l'une quelconque des revendications précédentes comme masse auto-adhésive.

6. Utilisation du polyacrylate selon l'une quelconque des revendications précédentes comme masse auto-adhésive pour une bande adhésive, la masse auto-adhésive d'acrylate se trouvant sous forme d'un film simple face ou double face sur une feuille support.
